(19)

**Europäisches Patentamt**
**European Patent Office**
**Office européen des brevets**

(11) **EP 2 854 045 B1**

(12) **EUROPÄISCHE PATENTSCHRIFT**

(45) Veröffentlichungstag und Bekanntmachung des
Hinweises auf die Patenterteilung:
**06.04.2016   Patentblatt 2016/14**

(51) Int Cl.:
**G06F 17/18** *(2006.01)*

(21) Anmeldenummer: **13186464.7**

(22) Anmeldetag: **27.09.2013**

(54) **Verfahren und System zum Bewerten von erhobenen Messwerten eines Systems**

Method and system for the evaluation of recorded measured values of a system

Procédé et système d'évaluation de valeurs de mesures collectées d'un système

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**01.04.2015   Patentblatt 2015/14**

(73) Patentinhaber: **Deutsche Telekom AG**
**53113 Bonn (DE)**

(72) Erfinder:
• **Löhlein, Bernhard**
**97837 Erlenbach (DE)**
• **Roshandel, Mehran**
**13591 Berlin (DE)**

• **Ketabdar, Hamed**
**10551 Berlin (DE)**
• **Schüssler, Martin**
**39291 Möser (DE)**
• **Shahin, Tajik**
**12195 Berlin (DE)**

(74) Vertreter: **Vossius & Partner**
**Patentanwälte Rechtsanwälte mbB**
**Siebertstrasse 3**
**81675 München (DE)**

(56) Entgegenhaltungen:
**EP-A2- 1 583 314        US-A1- 2013 046 727
US-A1- 2013 198 119**

EP 2 854 045 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft ein Verfahren und ein System zum Bewerten von erhobenen Messwerten eines System S, das sich in einem fehlerfreien oder fehlerbehafteten Zustand befinden kann. Das System weist dabei mindestens ein Kommunikationsnetzwerk, eine Netzwerkkomponente eines Kommunikationssystems und/oder einen Dienst eines Kommunikationsnetzwerks auf.

Im Bereich des Erkennens anomaler bzw. nicht normaler Messwerte, sogenannter Ausreißer, weist der Stand der Technik verschiedene Verfahren zum Auffinden von anomalen bzw. nicht normalen Messwerten auf. Das Auffinden von nicht normalen Messwerten wird dabei als "Outlier Detection" bzw. als Ausreißererkennung oder auch als "Anomaly Detection" bezeichnet.

So wird beispielsweise in [1] die Anwendung der Ausreißererkennung als einer der Hauptschritte in dem Bereich des Data Minings beschrieben. Dabei wird in [1] besondere Aufmerksamkeit der Robustheit der verwendeten Schätzung gelegt und es werden verschiedene Möglichkeiten der Ausreißererkennung basierend auf Distanzmessungen, Clusterverfahren sowie räumlichen Verfahren dargestellt.

In [2] wird die Bedeutung der Ausreißererkennung als ein wichtiges Problem für verschiedene Anwendungsbereiche sowie Wissenschaftsdisziplinen erörtert.

Die aus dem Stand der Technik bekannten Verfahren zum Thema Ausreißererkennung unterscheiden sich zunächst in den zugrundeliegenden Annahmen und Voraussetzungen. Einige Verfahren benötigen zur Ausreißererkennung die zugrundeliegenden Verteilungen und deren Parameter, mit denen ein System S die Messwerte erzeugt. Weiterhin gibt es Verfahren, die durch einen "Local Outlier Probability Algorithm" (LoOP, [3]) einen Wahrscheinlichkeitswert in Zusammenhang mit einem "Local Outlier Factor Algorithm" (LOF, [4]) bzw. verwandten Algorithmen berechnen.

Desweiteren ist aus [5] ein Verfahren bekannt, um aus Scorewerten als Ausgabe einer beliebigen Scorefunktion zur Ausreißererkennung eine Transformation zu Wahrscheinlichkeitswerten, d.h. Werten in einem Intervall von [0, 1], zu erhalten. Dieser Wahrscheinlichkeitswert gibt die Wahrscheinlichkeit an, dass ein Messwert aus einer Menge V bezüglich der zugrundeliegenden Messwertmenge ein Ausreißer ist. Die Wahrscheinlichkeiten werden dazu genutzt, um eine Liste mit sehr wahrscheinlichen Ausreißern zu erstellen.

Die Veröffentlichung [6] betrifft ein System und ein Verfahren zur Datenfilterung, um funktionale und Trendlinie Ausreißer Bias zu reduzieren.

Bei herkömmlichen Verfahren zum Erkennen von Ausreißern werden gewöhnlicherweise Schwellwerte bzw. Grenzwerte eingesetzt. So kann bestimmt werden, dass oberhalb bzw. unterhalb eines solchen Schwellwertes bzw. Grenzwertes ein Messwert als Ausreißer bzw. als normaler Messwert angesehen werden kann.

Nachteilig bei der Verwendung von Schwellwerten ist, dass solche Schwellwerte meist mit aufwändigen Versuchen und Evaluationen ermittelt werden müssen. Auch werden Messwerte aus der Menge V, die sehr große Abweichungen gegenüber der Mehrheit der Messwerte haben, aber zu einem normalen Systemzustand von S gehören, durch die Verwendung eines Schwellwertes herausgefiltert, ohne dass diese gemäß einer zugeordneten Wahrscheinlichkeit in eine Lernmenge zur Bestimmung des Zustands eines Systems mit aufgenommen werden könnten.

Referenzen

[1] Irad Ben-Gal. "Outlier detection", in: Maimon O. and Rockach L. (Eds.), "Data Mining and Knowledge Discovery Handbook: A Complete Guide for Practitioners and Researchers" Kluwer Academic Publishers, 2005.

[2] Varun Chandola, Arindam Banerjee, Vipin Kumar. "Outlier Detection: A Survey", 2007, (http://citeseerx.ist.psu.edu/viewdoc/summary?doi=10.1.1.108.8502)

[3] Hans-Peter Kriegel, P. Kröger, E. Schubert, A. Zimek. "LoOP: Local Outlier Probabilities", in Proceedings of 18th ACM Conference on Information and Knowledge Management(CIKM),2009(http://www.dbs.ifi.lmu.de/Publikationen/Papers/LoOP 1649.pdf).

[4] M. M. Breunig, Hans-Peter Kriegel, R.T. Ng, J. Sander. "LOF: Identifying Densitybased Local Outliers", in ACM SIGMOD Record. Nr. 29, 2000, (http://www.dbs.ifi.lmu.de/Publikationen/Papers/LOF.pdf)

[5] Hans-Peter Kriegel, Peer Kröger, Erich Schubert, Arthur Zimek. "Interpreting and Unifying Outlier Scores", in Proceedings of 11th SIAM International Conference on Data Mining. 2011, (http://siam.omnibooksonline.com/2011datamining/data/papers/018.pdf).

[6] US 2013/046727 A1

Der Erfindung liegt die Aufgabe zugrunde, ein Verfahren und ein System zum Bewerten von erhobenen Messwerten eines System S, das sich in einem fehlerfreien/normalen oder fehlerbehafteten/nicht normalen Zustand befinden kann, bereitzustellen.

Diese Aufgabe wird mit den Merkmalen der unabhängigen Patentansprüche gelöst. Abhängige Ansprüche betreffen erfindungsgemäße, bevorzugte Ausführungsformen.

Die Erfindung geht dabei von dem Grundgedanken aus, dass ein vorzugsweise maschinelles oder statistisches Lernsystem L aus unmarkierten Messwerten V eines zu überwachenden Systems S automatisiert Messwerte bewerten kann. Die nicht normalen Messwerte können ein Indiz darstellen, dass sich das System S in einem fehlerhaften Zustand befindet. Unmarkiert bedeutet, dass zum Messwert keine Information vorliegt, in welchem Zustand - fehlerfrei/fehlerbehaftet - sich das System S befunden hat zum Zeitpunkt der Messwerterhebung.

Es wird ein randomisiertes/zufallsbasiertes Verfahren bereitgestellt, welches vor der Anwendung eines Lernsystems aus einer Lernmenge V von Messwerten diejenigen entfernt, die mit hoher Wahrscheinlichkeit von einem fehlerbehafteten Zustand eines Systems S stammen. Es wird dadurch verhindert, dass solche Messwerte den Lernprozess des Lernsystems L negativ beeinflussen, insofern, dass das gelernte Modell M bei der Bewertung zukünftiger, neuer Messwerte W einen fehlerbehafteten Zustand des Systems S fehlerhaft als normal bewerten würde. Auf der anderen Seite wird der Beobachtung Rechnung getragen, dass solche Werte gerade wertvoll für den Lernprozess eines Lernsystems sind und nach Möglichkeit nicht (gänzlich) entfernt werden sollten. Die Erfindung berücksichtigt dabei, dass Messwerte in V vorliegen können, die zwar im Vergleich zu den anderen Messwerten in V einen außergewöhnlichen Wert einnehmen, jedoch nicht in einem fehlerbehafteten Zustand von dem System S ermittelt wurden und daher als normal anzusehen sind.

Die Erfindung betrifft ein Verfahren zum Bewerten von erhobenen Messwerten eines System S, das sich in einem fehlerfreien/normalen oder fehlerbehafteten/nicht-normalen Zustand befinden kann, wobei das System S mindestens ein Kommunikationsnetzwerk, eine Netzwerkkomponente eines Kommunikationssystems und/oder einen Dienst eines Kommunikationsnetzwerks aufweist, mit den folgenden Schritten, bevorzugt in folgender Reihenfolge: a) Bilden einer Menge V unmarkierter Messwerte v des Systems S; b) Bilden einer modifizierten Lernmenge V' mit Messwerten v' für ein Lernsystem L durch Entfernen und/oder Gewichten von Messwerten aus der Menge V unter Verwendung einer zufallsbasierten Methode; c) Bilden eines Modells M zur Bewertung von Messwerten des Systems S durch das Lernsystem L aus der modifizierten Lernmenge V'; und d) Bewerten von Messwerten des Systems S durch ein Bewertungssystem B unter Verwendung des Modells M.

Das System S kann ein System mit zwei Systemzuständen - fehlerfrei/normal und fehlerbehaftet/nicht normal - sein. Das Verfahren lässt sich aber auch auf andere Systeme S anwenden, die andere Systemzustände, beispielsweise mehrere Systemzustände, haben.

Über die unmarkierten Messwerte v des Systems S müssen erfindungsgemäß nicht notwendigerweise vertrauenswürdige Informationen vorliegen, ob der jeweilige Messwert zu einem Zeitpunkt gemessen wurde, als sich das System S in einem fehlerbehafteten Zustand oder fehlerfreien Zustand befunden hat. Die Messwerte werden dabei an dem Messsystem S erhoben und können Indikatoren über den Systemzustand darstellen. Für den Fall, dass verschiedene Typen von Messwerten vorliegen, können dem entsprechenden Messwert auch Angaben über den Typ des Messwertes zugeordnet werden. Für den Fall, dass es sich bei den Messwerten um Zeitreihen handelt, können der Menge V zusätzlich Angaben über den Zeitpunkt der Messung für die einzelnen Messwerte v zugeordnet werden.

Gemäß einer erfindungsgemäßen Ausführungsform weist der Schritt b) folgende Schritte, bevorzugt in folgender Reihenfolge, auf: b1) Bilden einer Scorewertmenge Q mit Scorewerten q aus der Menge V durch mindestens eine Scorefunktion F: $V \rightarrow Q$, $v \mapsto F(v)=q$; b2) Bilden einer Wahrscheinlichkeitsmenge P mit Wahrscheinlichkeiten p aus der Scorewertmenge Q durch mindestens eine Transformationsfunktion T: $Q \rightarrow P$, $q \mapsto T(q) = T(F(v)) = p$; b3) Bilden der modifizierten Lernmenge V' von Messwerten, wobei die Messwerte $v \in V$ mit einer entsprechenden Wahrscheinlichkeit von 1-p, mit p=T(F(v)) in die modifizierte Lernmenge V' aufgenommen werden und/oder wobei die Messwerte $v \in V$ eine entsprechende Gewichtung durch mindestens eine Gewichtungsfunktion G erhalten.

Die Scorefunktion F kann zu jedem einzelnen Messwert der Menge V oder einer Untermenge von Messwerten - beispielsweise im Fall von Messwerten zu verschiedenen Typen von Messwerten zu einem Zeitpunkt oder einer gewissen Instanz - aus der Lernmenge V einen Scorewert bilden. Dabei kann der Scorewert ohne Beschränkung der Allgemeinheit eine reelle Zahl sein. Ein niedriger Scorewert kann beispielsweise mit einem fehlerfreien Messwert und ein hoher Scorewert mit einem fehlerbehafteten Messwert assoziiert werden.

Die Transformationsfunktion T kann zu einem Scorewert, beispielsweise einer reellen Zahl, einen Wahrscheinlichkeitswert, beispielsweise eine reelle Zahl im Intervall von [0, 1] zuordnen. So kann beispielsweise ein Messwert v mit T(v) = 0 mit einer Wahrscheinlichkeit 0 nicht aus der Menge V entfernt werden, d.h. sicher in eine modifizierte Lernmenge V' übertragen werden bzw. verbleiben. Ein Messwert v hingegen mit T(v) = 1 kann beispielsweise mit einer Wahrscheinlichkeit 1 aus der Menge V entfernt werden, also nicht in eine Lernmenge V' übertragen werden bzw. verbleiben.

Die Gewichtsfunktion G kann für jede Wahrscheinlichkeit p, die durch T bestimmt ist, eines Messwertes v ein Gewicht berechnen. Das Gewicht des zugehörigen Messwertes v kann dabei einen Wert repräsentieren, mit dem der Messwert v im Lernprozess/bei der Aufnahme in V' gewichtet werden soll. So können Messwerte mit einem hohen Gewicht einen größeren Einfluss auf das Modell M haben. Die Gewichtsfunktion kann dabei durch G(p) = 1-p definiert sein.

Die Funktionen F, T und G können sowohl für einzelne Messwerte v als auch für eine Menge von Messwerten V definiert sein.

Gemäß einer weiteren erfindungsgemäßen Ausführungsform weist das Verfahren ferner den Schritt auf: Bestimmen, ob sich das System S in einem fehlerfreien oder einem fehlerbehafteten Zustand befindet.

Auch kann für eine andere Menge W unmarkierter Messwerte w des Systems S, beispielsweise zu einem späteren Zeitpunkt, bestimmt werden, ob sich das System S zu dem jeweiligen Zeitpunkt in einem fehlerfreien oder einem fehlerbehafteten Zustand befindet. Diese Bestimmung kann durch das angelernte Modell M bzw. das Bewertungssystem B erfolgen.

Gemäß einer weiteren erfindungsgemäßen Ausführungsform kann die Scorefunktion F ein eigenständiges, vorzugsweises maschinelles, Lernsystem L' und Bewertungssystem B' mit Ausgabe eines Scorewertes darstellen. Auch kann die Scorefunktion F unter Berücksichtigung der k-nächsten Nachbarn und/oder des Interquantil-Bereichsfaktors und/oder des lokalen Ausreißerfaktors gebildet sein. Ferner kann die Scorefunktion F für jeden Messwert v der Menge V den Abstand zum nächstgelegenen Nachbarn, d.h. den minimalen Abstand $d(v)$ des Messwertes v bilden und durch den mittleren Abstand m aller Messwerte v aus V teilen, so dass gilt $F: V \rightarrow Q, v \mapsto F(v) = d(v)/m = q$. Auch kann die Transformationsfunktion T eine stetig wachsende Funktion, vorzugsweise mit $0 \leq T(x) \leq 1$ für alle $x \in \mathbb{R}$, besonders bevorzugt eine Normalverteilung, eine Weibull-Verteilung, eine Beta-Verteilung, oder eine stetige Gleichverteilung sein. Die Gewichtungsfunktion G kann definiert sein als $G(p) = 1-p = 1-T(F(v))$.

Die stetig wachsende Funktion der Transformationsfunktion T kann vorzugsweise die Eigenschaft $0 \leq T(x) \leq 1$ für alle $x \in \mathbb{R}$ mit $T(-\infty) \geq 0$ und $T(+\infty) \leq 1$ aufweisen.

Auch können sich für die Scorefunktion F Algorithmen verwenden lassen, die ohne die Kenntnis der zugrunde liegenden Verteilung der Messwerte arbeiten können. Die Scorefunktion F kann auch einen Local Outlier Factor Algorithmus oder einen Local Outlier Probability Algorithmus aufweisen.

Gemäß einer weiteren erfindungsgemäßen Ausführungsform können die Schritte b1) bis b3) mehrmals hintereinander iterativ ausgeführt werden.

Durch das mehrmals hintereinander iterative Ausführen der Schritte b1) bis b3) können die Scorefunktion F, die Transformationsfunktion T und das zufällige Entfernen von Messwerten aus V bzw. das Gewichten von Messwerten aus V mehrfach hintereinander angewendet werden.

Gemäß einer weiteren erfindungsgemäßen Ausführungsform kann die Menge V in Schritt a) in Teilmengen V_1,..., V_N mit $N \in \mathbb{N}$ partitioniert werden und in Schritt b) können modifizierte Teillernmengen V_1',...,V_N' mit $N \in \mathbb{N}$ gebildet werden und die Lernmenge V' kann aus den modifizierten Teillernmengen V_1',...,V_N' zusammengefügt werden.

Dementsprechend können auch in b1) aus den Teilmengen V_1, ..., V_N entsprechende Scorewertmengen Q_1,..., Q_N mit $N \in \mathbb{N}$ durch mindestens eine Scorefunktion F gebildet werden. Desweiteren können in b2) aus den entsprechenden Scorewertmengen Q_1,..., Q_N durch mindestens eine Transformationsfunktion T entsprechende Wahrscheinlichkeitsmengen P_1, ...P_N mit $N \in \mathbb{N}$ gebildet werden.

Gemäß einer weiteren erfindungsgemäßen Ausführungsform kann in Schritt b) beim Entfernen und/oder Gewichten von Messwerten v aus der Menge V auch mindestens ein nächster Nachbar des Messwertes v entfernt werden. Das Entfernen der nächsten Nachbarn des Messwertes v kann nach wertmäßigen und/oder zeitlichen Kriterien durchgeführt werden. So kann beispielsweise ein nächster Nachbar entfernt werden, der einen vergleichbaren Wert hat, wie der Messwert v oder dem Wert des Messwerts v sehr nahe kommt. Auch kann beispielsweise der nächste Nachbar danach ausgewählt werden, dass er sich in zeitlicher Nähe zum Messwert befindet. So kann der nächste Nachbar beispielsweise gleichzeitig oder innerhalb eines Zeitlimits vor oder nach dem eigentlich zu entfernenden Messwert erhoben worden sein.

Gemäß einer weiteren erfindungsgemäßen Ausführungsform können die Messwerte aus der Gruppe ausgewählt sein, die umfasst: Auslastung einer Berechnungseinheit, benutzter und freier Speicherplatz, Auslastung und Zustand von Eingabe- und Ausgabekanälen, Anzahl fehlerfreier oder fehlerbehafteter Pakete, Länge von Übertragungswarteschlangen, fehlerfreie oder fehlerbehaftete Dienstanfragen, Bearbeitungszeit einer Dienstanfrage.

Die Erfindung betrifft auch ein System zum Bewerten von erhobenen Messwerten eines System S, das sich in einem fehlerfreien oder fehlerbehafteten Zustand befinden kann, wobei das System S mindestens ein Kommunikationsnetzwerk, eine Netzwerkkomponente eines Kommunikationssystems und/oder einen Dienst eines Kommunikationsnetzwerks aufweist, mit: einer Einrichtung zum Bilden einer Menge V unmarkierter Messwerte v des Systems S; einer Einrichtung zum Bilden einer modifizierten Lernmenge V' mit Messwerten v' für ein Lernsystem L durch Entfernen und/oder Gewichten von Messwerten aus der Menge V unter Verwendung einer zufallsbasierten Methode; Lernsystem L geeignet zum Bilden eines Modells M zur Bewertung von Messwerten des Systems S aus der modifizierten Lernmenge V'; und Bewertungssystem B geeignet zum Bewerten von Messwerten des Systems S unter Verwendung des Modells M.

Gemäß einer weiteren erfindungsgemäßen Ausführungsform kann die Einrichtung zum Bilden einer modifizierten Lernmenge V' aufweisen: Einrichtung zum Bilden einer Scorewertmenge Q mit Scorewerten q aus der Menge V durch mindestens eine Scorefunktion F: V → Q, v ↦ F(v) =q; Einrichtung zum Bilden einer Wahrscheinlichkeitsmenge P mit Wahrscheinlichkeiten p aus der Scorewertmenge Q durch mindestens eine Transformationsfunktion T: Q → P, q ↦ T(q) = T(F(v)) = p.

Die Einrichtung zum Bilden der modifizierten Lernmenge V' kann geeignet sein, die modifizierte Lernmenge V' von Messwerten durch Aufnahme der Messwerte v ∈ V mit einer entsprechenden Wahrscheinlichkeit von 1-p, mit p=T(F(v)) in die modifizierte Lernmenge V' zu bilden. Auch kann die Einrichtung zum Bilden der modifizierten Lernmenge V' geeignet sein, die modifizierte Lernmenge V' von Messwerten durch Gewichtung der Messwerte v ∈ V durch mindestens eine Gewichtungsfunktion G zu bilden.

Gemäß einer weiteren erfindungsgemäßen Ausführungsform kann das System zum Bewerten von erhobenen Messwerten eines System S ferner eine Einrichtung aufweisen zum Bestimmen, ob sich das System S in einem fehlerfreien oder einem fehlerbehafteten Zustand befindet.

Gemäß einer weiteren erfindungsgemäßen Ausführungsform kann die Einrichtung zum Bilden einer Scorewertmenge Q geeignet sein, die Scorewertmenge Q mehrmals zu bilden. Auch kann die Einrichtung zum Bilden einer Wahrscheinlichkeitsmenge P geeignet sein, die Wahrscheinlichkeitsmenge mehrmals zu bilden. Ferner kann die Einrichtung zum Bilden der modifizierten Lernmenge V' geeignet sein, die modifizierte Lernmenge V' mehrmals zu bilden.

Gemäß einer weiteren erfindungsgemäßen Ausführungsform kann die Einrichtung zum Bilden einer Menge V unmarkierter Messwerte v des Systems S geeignet sein, die Menge V in Teilmengen V_1,..., V_N mit $N \in \mathbb{N}$ zu partitionieren. Auch kann die Einrichtung zum Bilden einer modifizierten Lernmenge V' geeignet sein, modifizierte Teillernmengen V_1',...,V_N' mit $N \in \mathbb{N}$ zu bilden und die Lernmenge V' aus den modifizierten Teillernmengen V_1',...,V_N' zusammenzufügen.

Gemäß einer weiteren erfindungsgemäßen Ausführungsform kann die Einrichtung zum Bilden einer modifizierten Lernmenge V' geeignet sein, beim Entfernen und/oder Gewichten von Messwerten v aus der Menge V auch mindestens einen nächsten Nachbarn des Messwertes v zu entfernen.

Die vorliegende Erfindung stellt ein Verfahren zum Bewerten von erhobenen Messwerten eines Systems S bereit, welches ohne die Anwendung von Schwellwerten auskommt und stattdessen ein randomisiertes/zufallsbasiertes Verfahren verwendet. Durch die Verwendung eines randomisierten/zufallsbasierten Verfahrens muss durch den Anwender kein Schwellwert mit aufwendigen Versuchen und Evaluationen ermittelt werden und auch Messwerte aus der Menge V, die sehr große Abweichungen gegenüber der Mehrheit der Messwerte haben, aber zu einem normalen Systemzustand von S gehören, haben eine Chance - gemäß der zugeordneten Wahrscheinlichkeit - in die Lernmenge von Messwerten aufgenommen zu werden. Bei Verfahren mit Schwellwerten ist dieses Ziel nur schwer bzw. gar nicht erreichbar. Das erfindungsgemäße Verfahren benötigt keine Kenntnisse über die zugrundeliegenden Verteilungen der Messwerte; falls diese Kenntnis dennoch vollständig bzw. teilweise vorliegt, kann dies bei der Auswahl der Scorefunktion(en) F und Transformationsfunktion(en) T herangezogen werden. Im Gegensatz zu Verfahren des Standes der Technik werden in der vorliegenden Erfindung durch das randomisierte Verfahren mit der Funktion T berechnete Wahrscheinlichkeiten dazu genutzt, um eine Lernmenge randomisiert zu bilden; dabei kann nicht nur die aktuelle Lernmenge V von Bedeutung sein, sondern das mögliche Verhalten der Messwerte des Systems S darüber hinaus. Die berechneten Wahrscheinlichkeitswerte werden nicht (nur) dazu genutzt, um eine Liste mit Ausreißern zu erstellen, sondern werden in einem randomisierten Verfahren genutzt, um eine reduzierte Lernmenge V' aus der ursprünglichen Lernmenge V zu bestimmen.

Die Erfindung wird nachstehend anhand von Beispielen und Zeichnungen näher erläutert.

Es zeigen:

Fig. 1 eine schematische Darstellung eines Verfahrens zum Bewerten von erhobenen Messwerten eines Systems nach einem herkömmlichen Verfahren des Standes der Technik,

Fig. 2 eine schematische Darstellung einer bevorzugten Ausführungsform eines Verfahrens zum Bewerten von erhobenen Messwerten eines Systems gemäß der vorliegenden Erfindung,

Fig. 3 eine schematische Darstellung einer bevorzugten Ausführungsform eines Systems zum Bewerten von erhobenen Messwerten eines Systems S gemäß der vorliegenden Erfindung, und

Fig. 4 eine schematische Darstellung einer als Transferfunktion genutzten Weibull-Verteilung eines bevorzugten Ausführungsbeispiels eines Verfahrens zum Bewerten von erhobenen Messwerten eines Systems gemäß der vorliegenden Erfindung.

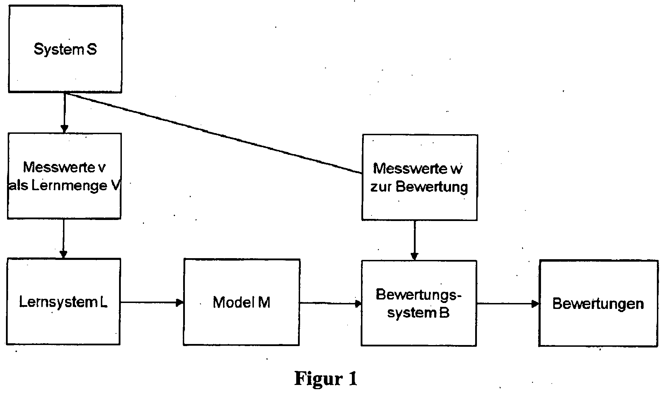

Fig. 1 zeigt eine schematische Darstellung eines herkömmlichen Verfahrens zum Bewerten von erhobenen Messwerten eines Systems S gemäß des Standes der Technik.

An einem System S, beispielsweise einem Netzwerk, wird eine Menge V von Messwerten v erhoben. Diese Menge V soll als Lernmenge für ein Lernsystem L dienen. Die Messwerte v der Menge V sind unmarkiert, d.h. es kann keine Aussage darüber getroffen werden, dass die Messwerte v fehlerhaft sind oder nicht, d.h. ob sich das System S bei Erhebung der Messwerte in einem fehlerhaften Zustand befindet oder nicht.

Das Lernsystem L bewertet mit Hilfe eines festgelegten Schwellwertes die Messwertmenge V bzw. die Messwerte v. In dem vorliegenden Fall werden Messwerte v, die unterhalb des Schwellwertes liegen, aus der Lernmenge entfernt und nicht weiter berücksichtigt. Die so ermittelte Lernmenge V', die nur die Messwerte v oberhalb des Schwellwertes aufweist, wird von dem Lernsystem L verwendet, um ein Modell M zu bilden. Das Modell M stellt dabei eine Repräsentation des fehlerfreien Systems S bezüglich der angelernten Messwerte dar. Mit dem Modell M soll nun für zukünftige, neue Messwerte w eine Aussage getroffen werden, ob sich das System S bezüglich der neuen Messwerte w in einem fehlerhaften oder fehlerbehafteten Zustand befindet.

Dazu wird unter Verwendung des Modells M ein Bewertungssystem B gebildet. Anschließend werden die zu evaluierenden Messwerte w der neuen Messwertmenge W dem Bewertungssystem B zugeführt. Anschließend führt das Bewertungssystem B die Bewertung der Messwerte w der Messwertmenge W unter Berücksichtigung des gebildeten Modells M aus und trifft eine Aussage, ob die Messwerte w fehlerbehaftet sind oder nicht und somit, ob sich das System S in einem fehlerbehafteten Zustand befindet oder nicht.

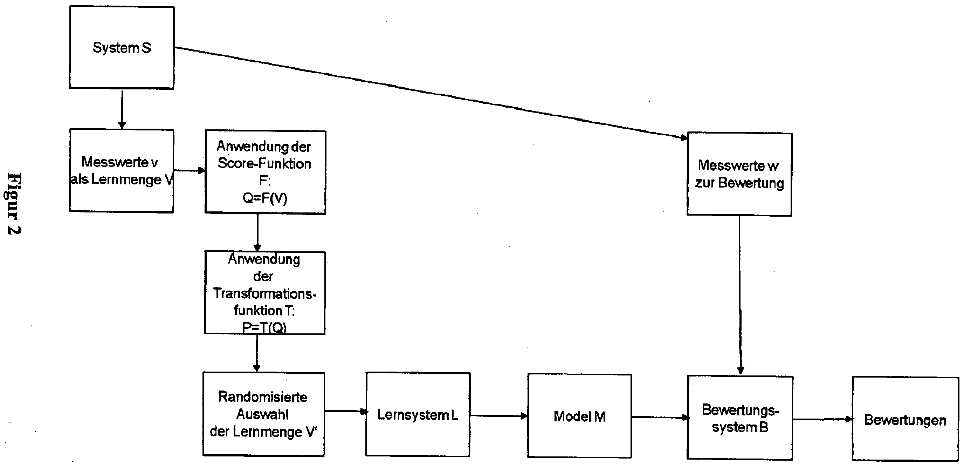

Fig. 2 zeigt eine schematische Darstellung einer bevorzugten Ausführungsform eines Verfahrens zum Bewerten von erhobenen Messwerten eines Systems S gemäß der vorliegenden Erfindung. In dieser bevorzugten Ausführungsform werden wieder an einem System S Messwerte v erhoben und zu einer Messwertmenge V, die als Lernmenge gedacht ist, zusammengeführt. Auf die Messwerte v wird nun eine Scorefunktion F angewendet und somit eine Scorewertmenge Q mit Scorewerten q gebildet. Anschließend wird auf diese Scorewertmenge Q eine Transformationsfunktion T angewendet und somit eine Wahrscheinlichkeitsmenge P mit Wahrscheinlichkeiten p gebildet. Durch eine randomisierte Auswahl wird anschließend die modifizierte Lernmenge V' von Messwerten gebildet. Dabei werden die Messwerte v mit einer entsprechenden Wahrscheinlichkeit von 1-p in die modifizierte Lernmenge V' aufgenommen. Die Messwerte v können auch (bzw. nur) eine entsprechende Gewichtung durch eine geeignete Gewichtungsfunktion G erhalten und dementsprechend werden alle Messwerte v ∈ V mit entsprechenden Gewichtungen in die modifizierten Lernmenge V' aufgenommen.

Anschließend bildet das Lernsystem L unter Verwendung der Lernmenge V' ein geeignetes Modell M, wobei das Modell M wiederum eine Repräsentation des fehlerfreien Systems S darstellt.

Unter Verwendung des Modells M wird anschließend ein Bewertungssystem B gebildet. Dem Bewertungssystem B werden neu erhobene Messwerte w ∈ W des Systems bereitgestellt und das Bewertungssystem bewertet, ob die neuen Messwerte w ∈ W fehlerhaft oder normal sind und sich dementsprechende das System S in einem fehlerhaften oder einem normalen Zustand befindet.

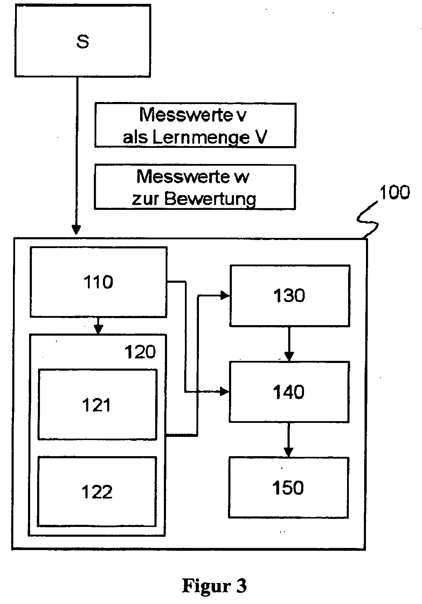

Fig. 3 zeigt eine schematische Darstellung einer bevorzugten Ausführungsform eines Systems zum Bewerten von erhobenen Messwerten eines Systems S gemäß der vorliegenden Erfindung. Das System 100 zum Bewerten von erhobenen Messwerten eines Systems S weist eine Einrichtung 110 zum Bilden einer Menge V unmarkierter Messwerte v des Systems S auf, eine Einrichtung 120 zum Bilden einer modifizierten Lernmenge V', ein Lernsystem L 130, ein Bewertungssystem B 140 sowie eine Einrichtung 150 zum Bestimmen, ob sich das System S in einem fehlerhaften oder einem fehlerbehafteten Zustand befindet.

Die Einrichtung 110 empfängt vom System S erhobene Messwerte v und bildet aus diesen erhobenen Messwerten eine Menge V unmarkierter Messwerte v. Anschließend wird in der Einrichtung 120 eine modifizierte Lernmenge V' mit Messwerten v' wie folgt gebildet:

In der Einrichtung 121 wird mittels einer Scorefunktion F aus der Menge V mit den Messwerten v eine Scorewertmenge Q mit den Scorewerten q gebildet. Anschließend wird in der Einrichtung 121 mittels einer Transformationsfunktion T aus der Scorewertmenge Q mit den Scorewerten q eine Wahrscheinlichkeitsmenge P mit Wahrscheinlichkeiten p gebildet. Anschließend werden in der Einrichtung 120 die Messwerte v mit einer entsprechenden Wahrscheinlichkeit von 1-p mit p = T(F(v)) in die modifizierte Lernmenge V' aufgenommen. Somit entsteht eine modifizierte Lemmenge V' durch Randomisierung/zufallsbasierte Behandlung der ursprünglich erhobenen Menge V.

Anschließend wird die modifizierte Lernmenge V' in dem Lernsystem L 130 dazu verwendet, ein Modell M für das System S zu bilden. Das Modell M stellt dabei eine Repräsentation des fehlerfreien Systems S dar.

Mithilfe dieses Modells M wird anschließend in dem Bewertungssystem B 140 bewertet, ob zu evaluierenden Messwerte w einer neuen Messwertmenge W des Systems fehlerbehaftet sind oder nicht. Die Messwertmenge W mit den zu evaluierenden Messwerten w kann ebenfalls von der Einrichtung 110 gebildet bzw. erhoben worden sein. Anschließend wird in einer Einrichtung 150 aufgrund der Bewertung der Messwerte w bestimmt, ob sich das System S in einem fehlerfreien oder einem fehlerbehafteten Zustand befindet. Die so ermittelten Ergebnisse, ob die Messwerte w fehlerbehaftet sind oder nicht bzw. ob das System S sich in einem fehlerbehafteten oder fehlerfreien Zustand befindet, können dementsprechend anschließend beispielsweise in einem weiteren System weiterverarbeitet werden.

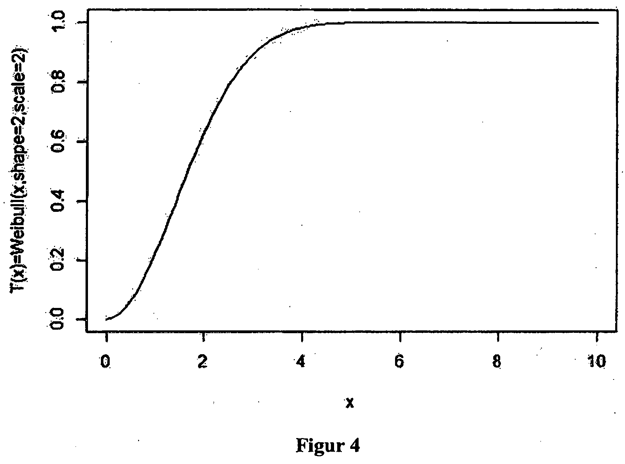

Fig. 4 zeigt eine schematische Darstellung einer als Transferfunktion genutzten Weibull-Verteilung eines bevorzugten Ausführungsbeispiels eines Verfahrens zum Bewerten von erhobenen Messwerten eines Systems gemäß der vorliegenden Erfindung. In dem hier beschriebenen Ausführungsbeispiel gemäß der vorliegenden Erfindung werden im Folgenden sechs Messwerte für eine bestimmte Messgröße (Typ) am System S gemessen und sollen später als Eingabe zum Lernsystem L dienen. Die Messwertmenge V der Messwerte v ist: V = (101, 102, 1, 100, 103, 105).

Der dritte Messwert v = 1 ist ein Ausreißer in der Messwertreihe. Das Lernsystem L hat aber keine Informationen darüber, ob es sich bei dem Ausreißer um einen fehlerbehafteten oder fehlerfreien Messwert handelt und ob dieser Ausreißer bei einem fehlerbehafteten oder fehlerfreien Systemzustand von S gemessen wurde.

Würde nun das Lernsystem L zu einer Lernmenge V als Modell M das Minimum und das Maximum der Messwerte aus V bilden, so würde sich ergeben:

- mit dem Messwert v = 1: Minimum = 1, Maximum = 105
- ohne den Messwert v = 1: Minimum = 100, Maximum = 105

Würde nun das Minimum und das Maximum als Modell M für die Beschreibung des fehlerfreien Systems genommen werden, so würden sich in dem vorliegenden Fall in Abhängigkeit, ob der Messwert 1 hinzugenommen werden würde oder nicht, zwei vollständig unterschiedliche Realisierungen ergeben. Im Falle Minimum = 1 und Maximum = 105 ist der Akzeptanzbereich für neue Messwerte größer als in dem Fall Minimum = 100 und Maximum = 105.

In dem ersten Fall würden mehr Messwerte als normal akzeptiert werden als in dem zweiten Fall.

Daher wird stattdessen im vorliegenden erfindungsgemäßen Beispiel als Scorefunktion F(v) die Funktion genommen, die für jeden Messwert v aus V den Abstand zum nächstgelegenen Messwert aus V bildet und diese durch den mittleren Abstand m aller Messwerte aus V teilt.

Es bezeichnet d(v) den minimalen Abstand des Messwertes v zu allen anderen Messwerten. Somit ergibt sich:

- d(101) = 1
- d(102) = 1
- d(1) = 99
- d(100) = 1
- d(103) = 1
- d(105) = 2

Folglich beträgt der mittlere Abstand m dann:

- m = (1+1+99+1+1+2)/6 = 105/6=17, 5

Mit der Scorefunktion F lassen sich nun die Scorewerte für die Messwerte aus V berechnen:

- F(101) = 1/17,5 ≈ 0,057
- F(102) = 1/17,5 ≈ 0,057
- F(1) = 99/17,5 ≈ 5,65
- F(100) = 1/17,5 ≈ 0,057
- F(103) = 1/17,5 ≈ 0,057
- F(105) = 2/17,5 ≈ 0,11

Erfindungsgemäß werden dann diese Scorewerte mit einer Transferfunktion T zu Wahrscheinlichkeiten transformiert. In dem erfindungsgemäßen Ausführungsbeispiel wird als Transferfunktion die Weibull-Verteilung mit den Parametern k = 2, dem sogenannten Shape-Parameter und $\lambda$ = 2, dem sogenannten Scale-Parameter, verwendet.

Die Weibull-Verteilung T ist wie folgt definiert:

- x < 0: T(x; k, lambda) = 0.
- x $\geq$ 0: T(x ; k, lambda) = (k/lambda) (x/lamba)^(k-1) exp(-(x/lambda)^k)

Hierbei ist "^" die Exponentation und exp() die Exponentialfunktion.

Die Fig. 3 zeigt die erfindungsgemäße Weibull-Verteilung mit diesen Parametern.

Die mit T transformierten Scorewerte ergeben sich zu:

- F(101)=1/17,5 ≈ 0,057, T(0,057)=0,00081
- F(102)=1/17,5 ≈ 0,057, T(0,057)=0,00081
- F(1)=99/17,5 ≈ 5,65, T(5,65)=0,9996
- F(100)=1/17,5 ≈ 0,057, T(0,057)=0,00081
- F(103)=1/17,5 ≈ 0,057, T(0,057)=0,00081
- F(105)=2/17,5 ≈ 0,11, T(0,057)=0,0030

Die einzelnen Messwerte werden jetzt auf Basis des berechneten Wahrscheinlichkeitswertes randomisiert aus der Lernmenge V entfernt bzw. beibehalten.

Somit werden die Messwerte 101, 102, 100, 103, 105 mit großer Wahrscheinlichkeit in V beibehalten und der Messwert 1 entfernt. Die modifizierte Lernmenge V' beinhaltet damit mit hoher Wahrscheinlichkeit die folgenden Messwerte:

- V'=(101, 102, 100, 103, 105).

Anschließend wird unter Verwendung der Lernmenge V' ein geeignetes Modell M gebildet und unter Verwendung des Modells M wird anschließend ein Bewertungssystem B gebildet.

Dem Bewertungssystem B können anschließend neu erhobene Messwerte w $\in$ W des Systems bereitgestellt werden und das Bewertungssystem kann bewerten, ob die neuen Messwerte w $\in$ W fehlerhaft oder normal sind und sich dementsprechende das System S in einem fehlerhaften oder einem normalen Zustand befindet.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

**Patentansprüche**

1. Verfahren zum Bewerten von erhobenen Messwerten eines systems S, das sich in einem fehlerfreien oder fehlerbehafteten Zustand befinden kann, wobei das System S mindestens ein Kommunikationsnetzwerk, eine Netzwerkkomponente eines Kommunikationssystems oder einen Dienst eines Kommunikationsnetzwerks aufweist, mit den folgenden Schritten, in folgender Reihenfolge:

   a) Bilden einer Menge V unmarkierter Messwerte v des Systems S;
   b) Bilden einer modifizierten Lernmenge V' mit Messwerten v' für ein Lernsystem L durch (i) Entfernen oder (ii) Gewichten oder (iii) Entfernen und Gewichten von Messwerten aus der Menge V unter Verwendung einer zufallsbasierten Methode;
   c) Bilden eines Modells M zur Bewertung von Messwerten des Systems S durch das Lernsystem L aus der modifizierten Lernmenge V'; und
   d) Bewerten von Messwerten des Systems S durch ein Bewertungssystem B unter Verwendung des Modells M;

   wobei in Schritt b) beim (i) Entfernen oder (ii) Gewichten oder (iii) Entfernen und Gewichten von Messwerten v aus der Menge V mindestens ein nächster Nachbar des Messwertes v entfernt wird.

2. Verfahren nach Anspruch 1, wobei der Schritt b) folgende Schritte aufweist:

b1) Bilden einer Scorewertmenge Q mit Scorewerten q aus der Menge V durch mindestens eine Scorefunktion F: V → Q, v ↦ F(v) =q;
b2) Bilden einer Wahrscheinlichkeitsmenge P mit Wahrscheinlichkeiten p aus der Scorewertmenge Q durch mindestens eine Transformationsfunktion T: Q → P, q ↦ T(q) = T(F(v)) = p;
b3) Bilden der modifizierten Lernmenge V' von Messwerten, wobei die Messwerte v ∈ V mit einer entsprechenden Wahrscheinlichkeit von 1-p, mit p=T(F(v)) in die modifizierte Lernmenge V' aufgenommen werden

oder
wobei die Messwerte v ∈ V eine entsprechende Gewichtung durch mindestens eine Gewichtungsfunktion G erhalten.

3. Verfahren nach Anspruch i, wobei der Schritt b) folgende Schritte aufweist:

b1) Bilden einer Scorewertmenge Q mit Scorewerten q aus der Menge V durch mindestens eine Scorefunktion F: V → Q, v ↦ F(v) =q;
b2) Bilden einer Wahrscheinlichkeitsmenge P mit Wahrscheinlichkeiten p aus der Scorewertmenge Q durch mindestens eine Transformationsfunktion T: Q → P, q ↦ T(q) = T(F(v)) = p;
b3) Bilden der modifizierten Lernmenge V' von Messwerten, wobei die Messwerte v ∈ V mit einer entsprechenden Wahrscheinlichkeit von 1-p, mit p=T(F(v)) in die modifizierte Lernmenge V' aufgenommen werden

und
wobei die Messwerte v ∈ V eine entsprechende Gewichtung durch mindestens eine Gewichtungsfunktion G erhalten.

4. Verfahren nach Anspruch 2 oder 3, wobei das Verfahren die Schritte b1) bis b3) in der genannten Reihenfolge aufweist.

5. Verfahren nach einem der Ansprüche 2 bis 4, wobei die Scorefunktion F ein eigenständiges Lernsystems L' und Bewertungssystem B' mit Ausgabe eines Scorewertes darstellen kann.

6. Verfahren nach Anspruch 5, wobei die Scorefunktion F ein eigenständiges, maschinelles, Lernsystem L' und Bewertungssystem B' mit Ausgabe eines Scorewertes darstellen kann.

7. Verfahren nach einem der Ansprüche 2 bis 6, wobei die Scorefunktion F unter Berücksichtigung der k-nächsten Nachbarn des Messwertes v gebildet ist.

8. Verfahren nach einem der Ansprüche 2 bis 7, wobei die Transformationsfunktion T eine stetig wachsende Funktion ist.

9. Verfahren nach Anspruch 8, wobei die Transformationsfunktion T eine stetig wachsende Funktion mit $0 \leq T(x) \leq 1$ für alle $x \in \mathbb{R}$ ist.

10. Verfahren nach Anspruch 8 oder 9, wobei die Transformationsfunktion T eine Normalverteilung, eine Weibull-Verteilung, eine Beta-Verteilung, oder eine stetige Gleichverteilung ist.

11. Verfahren nach einem der Ansprüche 2 bis 10, wobei die Gewichtungsfunktion G definiert ist als G(p)= 1-p = 1-T(F(v)).

12. Verfahren nach einem der Ansprüche 2 bis 11, wobei die Schritte b1) bis b3) mehrmals hintereinander iterativ ausgeführt werden.

13. Verfahren nach einem der vorstehenden Ansprüche, wobei die Menge V in Schritt a) in Teilmengen V_1,..., V_N mit $N \in \mathbb{N}$ partitioniert wird, und wobei in Schritt b) modifizierte Teillernmengen V_1',...,V_N' mit $N \in \mathbb{N}$ gebildet werden und die Lernmenge V' aus den modifizierten Teillernmengen V_1',...,V_N' zusammengefügt ist.

14. Verfahren nach einem der vorstehenden Ansprüche, wobei Messwerte aus der Gruppe ausgewählt sind, die umfasst: Auslastung einer Berechnungseinheit, benutzter und freier Speicherplatz, Auslastung und Zustand von Eingabe- und Ausgabekanälen, Anzahl fehlerfreier oder fehlerbehafteter Pakete, Länge von Übertragungswarteschlangen, fehlerfreie oder fehlerbehaftete Dienstanfragen, Bearbeitungszeit einer Dienstanfrage.

15. System zum Bewerten von erhobenen Messwerten eines System S, das sich in einem fehlerfreien oder fehlerbehafteten Zustand befinden kann, wobei das System S mindestens ein Kommunikationsnetzwerk, eine Netzwerkkomponente eines Kommunikationssystems oder einen Dienst eines Kommunikationsnetzwerks aufweist, mit:

   einer Einrichtung zum Bilden einer Menge V unmarkierter Messwerte v des Systems S; einer Einrichtung zum Bilden einer modifizierten Lernmenge V' mit Messwerten v' für ein Lernsystem L durch (i) Entfernen oder (ii) Gewichten oder (iii) Entfernen und Gewichten von Messwerten aus der Menge V unter Verwendung einer zufallsbasierten Methode;
   Wobei das Lernsystem L zum Bilden eines Modells M zur Bewertung von Messwerten des Systems S aus der modifizierten Lernmenge V' geeignet ist; und
wobei das Bewertungssystem B zum Bewerten von Messwerten des Systems S unter Verwendung des Modells M geeignet ist wobei die Einrichtung zum Bilden einer modifizierten Lernmenge V' geeignet ist, beim (i) Entfernen oder (ii) Gewichten oder (iii) Entfernen oder Gewichten von Messwerten v aus der Menge V mindestens einen nächsten Nachbarn des Mess wertes v zu Entfernen.

16. System nach Anspruch 15, wobei die Einrichtung zum Bilden einer modifizierten Lernmenge V' aufweist:

   Einrichtung zum Bilden einer Scorewertmenge Q mit Scorewerten q aus der Menge V durch mindestens eine Scorefunktion F: V → Q, v ↦ F(v) =q;
   Einrichtung zum Bilden einer Wahrscheinlichkeitsmenge P mit Wahrscheinlichkeiten p aus der Scorewertmenge Q durch mindestens eine Transformationsfunktion T: Q → P, q ↦ T(q) = T(F(v)) = p; und
   wobei die Einrichtung zum Bilden der modifizierten Lernmenge V' geeignet ist die modifizierte Lernmenge V' von Messwerten durch Aufnahme der Messwerte v ∈ V mit einer entsprechenden Wahrscheinlichkeit von 1-p, mit p=T(F(v)) in die modifizierte Lernmenge V'
   oder
   durch Gewichtung der Messwerte v ∈ V durch mindestens eine Gewichtungsfunktion G zu bilden.

17. System nach Anspruch 16, wobei die Einrichtung zum Bilden einer modifizierten Lernmenge V' aufweist:

   Einrichtung zum Bilden einer Scorewertmenge Q mit Scorewerten q aus der Menge V durch mindestens eine Scorefunktion F: V → Q, v ↦ F(v) =q;
   Einrichtung zum Bilden einer Wahrscheinlichkeitsmenge P mit Wahrscheinlichkeiten p aus der Scorewertmenge Q durch mindestens eine Transformationsfunktion T: Q → P, q ↦ T(q) = T(F(v)) = p; und
   wobei die Einrichtung zum Bilden der modifizierten Lernmenge V' geeignet ist die modifizierte Lernmenge V' von Messwerten durch Aufnahme der Messwerte v ∈ V mit einer entsprechenden Wahrscheinlichkeit von 1-p, mit p=T(F(v)) in die modifizierte Lernmenge V'
   und
   durch Gewichtung der Messwerte v ∈ V durch mindestens eine Gewichtungsfunktion G zu bilden.

**18.** System nach einem der Ansprüche 15 bis 17, wobei die Einrichtung zum Bilden einer Scorewertmenge Q geeignet ist die Scorewertmenge Q mehrmals zu bilden, und wobei die Einrichtung zum Bilden einer Wahrscheinlichkeitsmenge P geeignet ist die Wahrscheinlichkeitsmenge mehrmals zu bilden, und wobei die Einrichtung zum Bilden der modifizierten Lernmenge V' geeignet ist die modifizierte Lernmenge V' mehrmals zu bilden.

**19.** System nach eine der Ansprüche 15 bis 18, wobei die Einrichtung zum Bilden einer Menge V unmarkierter Messwerte v des Systems S geeignet ist, die Menge V in Teilmengen V_1,..., V_N mit $N \in \mathbb{N}$ zu partitionieren, und wobei die Einrichtung zum Bilden einer modifizierten Lernmenge V' geeignet ist, modifizierte Teillernmengen V_1',...,V_N' mit $N \in \mathbb{N}$ zu bilden und die Lernmenge V' aus den modifizierten Teillernmengen V_1',...,V_N' zusammenzufügen.

**20.** System nach einem der vorstehenden Ansprüche, wobei Messwerte aus der Gruppe ausgewählt sind, die umfasst: Auslastung einer Berechnungseinheit, benutzter und freier Speicherplatz, Auslastung und Zustand von Eingabe- und Ausgabekanälen, Anzahl fehlerfreier oder fehlerbehafteter Pakete, Länge von Übertragungswarteschlangen, fehlerfreie oder fehlerbehaftete Dienstanfragen, Bearbeitungszeit einer Dienstanfrage.

**Claims**

**1.** A method for rating measured values taken from a system S that may be in an error-free or erroneous state, wherein the system S comprises at least one communication network, a network component of a communication system or a service of a communication network, comprising the following steps, in the following order:

(a) forming a set V of unmarked measured values v from the system S;
(b) forming a modified learning set V' comprising measured values v' for a learning system L by (i) removal or (ii) weighting or (iii) removal and weighting of measured values from the set V using a random-based method;
(c) forming a model M for rating measured values from the system S by the learning system L from the modified learning set V'; and
(d) rating measured values from the system S by a rating system B using the model M;

wherein in step (b) at least one closest neighbor of the measured value v is removed during (i) removal or (ii) weighting or (iii) removal and weighting of measured values v from the set V.

**2.** The method according to claim 1, wherein step (b) comprises the following steps:

(b1) forming a score value set Q comprising score values q from the set V by at least one score function F: V → Q, v ↦ F(v) = q;
(b2) forming a probability set P comprising probabilities p from the score value set Q by at least one transformation function T: Q → P, q ↦ T(q) = T(F(v)) = p;
(b3) forming the modified learning set V' from measured values, wherein the measured values v ∈ V are included with a respective probability of 1-p, with p = T(F(v)), into the modified learning set V'

or
wherein the measured values v ∈ V are given a respective weighting by at least one weighting function G.

**3.** The method according to claim 1, wherein step (b) comprises the following steps:

(b1) forming a score value set Q comprising score values q from the set V by at least one score function F: V → Q, v ↦ F(v) = q;
(b2) forming a probability set P comprising probabilities p from the score value set Q by at least one transformation function T: Q → P, q ↦ T(q) = T(F(v)) = p;
(b3) forming the modified learning set V' from measured values, wherein the measured values v E V are included with a respective probability of 1-p, with p = T(F(v)), into the modified learning set V'

and
wherein the measured values v ∈ V are given a respective weighting by at least one weighting function G.

**4.** The method according to claim 2 or 3, wherein the method comprises steps (b1) to (b3) in the mentioned order.

**5.** The method according to any one of claims 2 to 4, wherein the score function F can represent an independent learning system L' and rating system B' with output of a score value.

**6.** The method according to claim 5, wherein the score function F can represent an independent machine learning system L' and rating system B' with output of a score value.

7. The method according to any one of claims 2 to 6, wherein the score function F is formed by considering the k next neighbors of the measured value v.

8. The method according to any one of claims 2 to 7, wherein the transformation function T is a continuously increasing function.

9. The method according to claim 8, wherein the transformation function T is a continuously increasing function with $0 \leq T(x) \leq 1$ for all $x \in \mathbb{R}$.

10. The method according to claim 8 or 9, wherein the transformation function T is a normal distribution, a Weibull distribution, a beta distribution or a continuous equipartition.

11. The method according to any one of claims 2 to 10, wherein the weighting function G is defined as G(p) = 1-p = 1-T(F(v)).

12. The method according to any one of claims 2 to 11, wherein steps (b1) to (b3) are carried out several times successively in an iterative manner.

13. The method according to any one of the preceding claims,
wherein in step (a) the set V is partitioned in subsets V_1,...,V_N with $N \in \mathbb{N}$, and
wherein in step (b) modified learning sub-sets V_1',...,V_N' with $N \in \mathbb{N}$ are formed and the learning set V' is combined from the modified learning sub-sets V_1', ...,V_N'.

14. The method according to any one of the preceding claims, wherein measured values are selected from the group comprising: capacity utilization of a calculating unit, used and free storage space, capacity utilization and state of input and output channels, number of error-free or erroneous packets, lengths of transmission queues, error-free and erroneous service inquiries, processing time of a service inquiry.

15. A system for rating measured values taken from a system S that may be in an error-free or erroneous state, wherein the system S comprises at least one communication network, a network component of a communication system or a service of a communication system, comprising:

a device for forming a set V of unmarked measured values v from the system S;
a device for forming a modified learning set V' comprising measured values v' for a learning system L by (i) removal or (ii) weighting or (iii) removal and weighing of measured values from the set V using a random-based method;
wherein the learning system L is suitable for forming a model M for rating measured values from the system S from the modified learning set V'; and
wherein the rating system B is suitable for rating measured values from the system S using the model M,
wherein the device for forming a modified learning set V' is suitable for removing also at least one closest neighbor of the measured value v from the set V during (i) removal or (ii) weighting or (iii) removal and weighting of measured values v.

16. The system according to claim 15, wherein the device for forming a modified learning set V' comprises:

a device for forming a score value set Q comprising score values q from the set V by at least one score function F: $V \rightarrow Q$, $v \mapsto F(v) = q$;
a device for forming a probability set P with probabilities p from the score value set Q by at least one transformation function T: $Q \rightarrow P$, $q \mapsto T(q)$ = T(F(v)) = p; and
wherein the device for forming the modified learning set V' is suitable for forming the modified learning set V' of measured values by introducing the measured values v ∈ V with a corresponding probability of 1-p, with p = T(F(v)) into the modified learning set V'
or
by weighting the measured values v ∈ V by at least one weighting function G.

17. The system according to claim 16, wherein the device for forming a modified learning set V' comprises:

a device for forming a score value set Q comprising score values q from the set V by at least one score function F: $V \rightarrow Q$, $v \mapsto F(v) = q$;
a device for forming a probability set P with probabilities p from the score value set Q by at least one transformation function T: $Q \rightarrow P$, $q \mapsto T(q)$ = T(F(v)) = p; and
wherein device for forming the modified learning set V' is suitable for forming the modified learning set V' of measured values by introducing the measured values v ∈ V with a corresponding probability of 1-p, with p = T(F(v)) into the modified learning set V'
and
by weighting the measured values v ∈ V by at least one weighting function G.

**18.** The system according to any one of claims 15 to 17, wherein the device for forming a score value set Q is suitable for forming the score value set Q several times, and

wherein the device for forming a probability set P is suitable for forming the probability set several times, and

wherein the device for forming the modified learning set V' is suitable for forming the modified learning set V' several times.

**19.** The method according to any one of claims 15 to 18, wherein the device for forming a set V of unmarked measured values v from the system S is suitable for partitioning the set V into sub-sets V_1,..., V_N with

$$N \in \mathbb{N},$$

and

wherein the device for forming a modified learning set V' is suitable for forming modified learning sub-sets V_1', ...,V_N' with $N \in \mathbb{N}$ and to combine the learning set V' from the modified learning sub-sets V_1', ...,V_N'.

**20.** The system according to any one of the preceding claims, wherein measured values are selected from the group comprising: capacity utilization of a calculating unit, used and free storage space, capacity utilization and state of input and output channels, number of error-free or erroneous packets, lengths of transmission queues, error-free and erroneous service inquiries, processing time of a service inquiry.

**Revendications**

**1.** Procédé d'évaluation de valeurs de mesure collectées d'un système S qui peut se trouver dans un état exempt d'erreurs ou entaché d'erreurs, le système S présentant au moins un réseau de communication, une composante de réseau d'un système de communication ou un service d'un réseau de communication, avec les étapes suivantes, dans l'ordre de succession suivant :

a) formation d'une quantité V de valeurs de mesure v non marquées du système S ;
b) formation d'une quantité d'apprentissage modifiée V' avec des valeurs de mesure v' pour un système d'apprentissage L par (i) l'enlèvement ou (ii) la pondération ou (iii) l'enlèvement et la pondération de valeurs de mesure à partir de la quantité V en utilisant une méthode à base aléatoire ;
c) formation d'un modèle M pour l'évaluation de valeurs de mesure du système S par le système d'apprentissage L à partir de la quantité d'apprentissage modifiée V' ; et
d) évaluation de valeurs de mesure du système S par un système d'évaluation B en utilisant le modèle M ;

procédé dans lequel, à l'étape b), lors de (i) l'enlèvement ou (ii) de la pondération ou (iii) de l'enlèvement et de la pondération de valeurs de mesure v à partir de la quantité V, au moins un voisin proche de la valeur de mesure v est enlevé.

**2.** Procédé selon la revendication 1, l'étape b) présentant les étapes suivantes :

b1) formation d'une quantité de valeurs de score Q avec des valeurs de score q à partir de la quantité V par au moins une fonction de score $F : V \rightarrow Q, v \mapsto F(v) = q$ ;
b2) formation d'une quantité de probabilités P avec des probabilités p à partir de la quantité de valeurs de score Q par au moins une fonction de transformation $T : Q \rightarrow P, q \mapsto T(q) = T(F(v)) = p$ ;
b3) formation de la quantité d'apprentissage modifiée V' de valeurs de mesure, les valeurs de mesure $v \in V$ ayant une probabilité correspondante de 1-p, avec $p = T(F(v))$ étant intégrées dans la quantité d'apprentissage modifiée V'
ou
les valeurs de mesure $v \in V$ recevant une pondération correspondante par au moins une fonction de pondération G.

**3.** Procédé selon la revendication 1, l'étape b) présentant les étapes suivantes :

b1) formation d'une quantité de valeurs de score Q avec des valeurs de score q à partir de la quantité V par au moins une fonction de score $F : V \rightarrow Q, v \mapsto F(v) = q$ ;
b2) formation d'une quantité de probabilités P avec des probabilités p à partir de la quantité de valeurs de score Q par au moins une fonction de transformation $T : Q \rightarrow P, q \mapsto T(q) = T(F(v)) = p$ ;
b3) formation de la quantité d'apprentissage modifiée V' de valeurs de mesure, les valeurs de mesure $v \in V$ ayant une probabilité correspondante de 1-p, avec $p = T(F(v))$ étant intégrées dans la quantité d'apprentissage modifiée V'

et les valeurs de mesure $v \in V$ recevant une pondération correspondante par au moins une fonction de pondération G.

**4.** Procédé selon la revendication 2 ou 3, le procédé présentant les étapes b1) à b3) dans l'ordre de succession cité.

5. Procédé selon l'une des revendications 2 à 4, la fonction de score F pouvant représenter un système d'apprentissage L' et un système d'évaluation B' autonomes avec production d'une valeur de score.

6. Procédé selon la revendication 5, la fonction de score F pouvant représenter un système d'apprentissage L' et un système d'évaluation B' autonomes automatisés avec production d'une valeur de score.

7. Procédé selon l'une des revendications 2 à 6, la fonction de score F étant formée en prenant en compte les voisins proches de k de la valeur de mesure v.

8. Procédé selon l'une des revendications 2 à 7, la fonction de transformation T étant une fonction continuellement croissante.

9. Procédé selon la revendication 8, la fonction de transformation T étant une fonction continuellement croissante avec $0 \leq T(x) \leq 1$ pour tous les $x \in \mathbb{R}$.

10. Procédé selon la revendication 8 ou 9, la fonction de transformation T étant une loi normale, une loi de Weibull, une loi bêta ou une loi uniforme continue.

11. Procédé selon l'une des revendications 2 à 10, la fonction de pondération G étant définie en tant que $G(p)= 1-p = 1-T(F(v))$.

12. Procédé selon l'une des revendications 2 à 11, les étapes b1) à b3) étant exécutées de façon itérative les unes après les autres plusieurs fois.

13. Procédé selon l'une des revendications précédentes,
la quantité V étant, à l'étape a), partagée en quantités partielles V_1, ..., V_N avec $N \in \mathbb{N}$, et des quantités d'apprentissage partielles modifiées V_1', ..., V_N' avec $N \in \mathbb{N}$ étant formées à l'étape b) et la quantité d'apprentissage V' étant assemblée à partir des quantités d'apprentissage partielles modifiées V_1', ..., V_N'.

14. Procédé selon l'une des revendications précédentes, des valeurs de mesure étant sélectionnées dans le groupe qui comprend : exploitation d'une unité de calcul, emplacement de mémoire utilisé et libre, exploitation et état de canaux d'entrée et de sortie, nombre de paquets exempts d'erreurs ou entachés d'erreurs, longueur de files d'attente de transmission, demandes de service exemptes d'erreurs ou entachées d'erreurs, temps de traitement d'une demande de service.

15. Système d'évaluation de valeurs de mesure collectées d'un système S qui peut se trouver dans un état exempt d'erreurs ou entaché d'erreurs, le système S présentant au moins un réseau de communication, une composante de réseau d'un système de communication ou un service d'un réseau de communication, avec :

un dispositif de formation d'une quantité V de valeurs de mesure v non marquées du système S ;
un dispositif de formation d'une quantité d'apprentissage modifiée V' avec des valeurs de mesure v' pour un système d'apprentissage L par (i) l'enlèvement ou (ii) la pondération ou (iii) l'enlèvement et la pondération de valeurs de mesure à partir de la quantité V en utilisant une méthode à base aléatoire ;
le système d'apprentissage L pour la formation d'un modèle M étant approprié pour l'évaluation de valeurs de mesure du système S à partir de la quantité d'apprentissage modifiée V' ; et
le système d'évaluation B étant approprié pour l'évaluation de valeurs de mesure du système S en utilisant le modèle M ;
le dispositif de formation d'une quantité d'apprentissage modifiée V' étant approprié pour enlever au moins un voisin proche de la valeur de mesure v lors de (i) l'enlèvement ou (ii) de la pondération ou (iii) de l'enlèvement ou de la pondération de valeurs de mesure v à partir de la quantité V.

16. Système selon la revendication 15, le dispositif de formation d'une quantité d'apprentissage modifiée V' présentant :

un dispositif de formation d'une quantité de valeurs de score Q avec des valeurs de score q à partir de la quantité V par au moins une fonction de score $F : V \rightarrow Q, v \mapsto F(v) = q$ ;

un dispositif de formation d'une quantité de probabilités P avec des probabilités p à partir de la quantité de valeurs de score Q par au moins une fonction de transformation $T: Q \rightarrow P, q \mapsto T(q) = T(F(v)) = p$ ; et

le dispositif de formation de la quantité d'apprentissage modifiée V' étant approprié pour former la quantité d'apprentissage modifiée V' de valeurs de mesure par l'intégration, dans la quantité d'apprentissage modifiée V', des valeurs de mesure $v \in V$ ayant une probabilité correspondante de 1-p, avec $p = T(F(v))$
ou
par la pondération des valeurs de mesure $v \in V$ par au moins une fonction de pondération G.

**17.** Système selon la revendication 16, le dispositif de formation d'une quantité d'apprentissage modifiée V' présentant :

un dispositif de formation d'une quantité de valeurs de score Q avec des valeurs de score q à partir de la quantité V par au moins une fonction de score $F : V \rightarrow Q, \mapsto F(v) = q$ ; un dispositif de formation d'une quantité de probabilités P avec des probabilités p à partir de la quantité de valeurs de score Q par au moins une fonction de transformation $T : Q \rightarrow P, q \mapsto T(q) = T(F(v)) = p$ ; et

le dispositif de formation de la quantité d'apprentissage modifiée V' étant approprié pour former la quantité d'apprentissage modifiée V' de valeurs de mesure par l'intégration, dans la quantité d'apprentissage modifiée V', des valeurs de mesure $v \in V$ ayant une probabilité correspondante de 1-p, avec $p = T(F(v))$
et

par la pondération des valeurs de mesure $v \in V$ par au moins une fonction de pondération G.

**18.** Système selon l'une des revendications 15 à 17, le dispositif de formation d'une quantité de valeurs de score Q étant approprié pour former la quantité de valeurs de score Q plusieurs fois, et le dispositif de formation d'une quantité de probabilités P étant approprié pour former la quantité de probabilités plusieurs fois, et le dispositif de formation de la quantité d'apprentissage modifiée V' étant approprié pour former la quantité d'apprentissage modifiée V' plusieurs fois.

**19.** Système selon l'une des revendications 15 à 18, le dispositif de formation d'une quantité V de valeurs de mesure v non marquées du système S étant approprié pour partager la quantité V en quantités partielles V_1, ..., V_N avec $N \in \mathbb{N}$, et le dispositif de formation d'une quantité d'apprentissage modifiée V' étant approprié pour former des quantités d'apprentissage partielles modifiées V_1', ..., V_N' avec $N \in \mathbb{N}$ et pour assembler la quantité d'apprentissage V' à partir des quantités d'apprentissage partielles modifiées V_1', ..., V_N'.

**20.** Système selon l'une des revendications précédentes, des valeurs de mesure étant sélectionnées dans le groupe qui comprend : exploitation d'une unité de calcul, emplacement de mémoire utilisé et libre, exploitation et état de canaux d'entrée et de sortie, nombre de paquets exempts d'erreurs ou entachés d'erreurs, longueur de files d'attente de transmission, demandes de service exemptes d'erreurs ou entachées d'erreurs, temps de traitement d'une demande de service.

**Figur 1**

Figur 2

System S

Messwerte v als Lernmenge V

Anwendung der Score-Funktion F: Q=F(V)

Anwendung der Transformations-funktion T: P=T(Q)

Randomisierte Auswahl der Lernmenge V'

Lernsystem L

Model M

Messwerte w zur Bewertung

Bewertungs-system B

Bewertungen

**Figur 3**

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013046727 A1

**In der Beschreibung aufgeführte Nicht-Patentliteratur**

- Outlier detection. **IRAD BEN-GAL.** Data Mining and Knowledge Discovery Handbook: A Complete Guide for Practitioners and Researchers. Kluwer Academic Publishers, 2005
- **VARUN CHANDOLA ; ARINDAM BANERJEE ; VIPIN KUMAR.** *Outlier Detection: A Survey,* 2007, http://citeseerx.ist.psu.edu/viewdoc/summary?doi=10.1.1.108.8502
- **HANS-PETER KRIEGEL ; P. KRÖGER ; E. SCHUBERT ; A. ZIMEK.** LoOP: Local Outlier Probabilities. *Proceedings of 18th ACM Conference on Information and Knowledge Management(CIKM),* 2009, http://www.dbs.ifi.lmu.de/Publikationen/Papers/LoOP 1649.pdf
- **M. M. BREUNIG ; HANS-PETER KRIEGEL ; R.T. NG ; J. SANDER.** LOF: Identifying Densitybased Local Outliers. *ACM SIGMOD Record. Nr. 29,* 2000, http://www.dbs.ifi.lmu.de/Publikationen/Papers/LOF.pdf
- **HANS-PETER KRIEGEL ; PEER KRÖGER ; ERICH SCHUBERT ; ARTHUR ZIMEK.** Interpreting and Unifying Outlier Scores. *Proceedings of 11th SIAM International Conference on Data Mining,* 2011, http://siam.omnibooksonline.com/2011datamining/data/papers/018.pdf